# EUROPEAN PATENT SPECIFICATION

(11) **EP 1 985 723 B1**
(45) Date of publication and mention of the grant of the patent: **25.03.2015**
(21) Application number: 08250635.3
(22) Date of filing: 25.02.2008
(51) Int. Cl.: C23C 4/10, C23C 4/12, F01D 11/12, C23C 4/18, C23C 28/00, F01D 5/28

(54) **Method for improved ceramic coating**
Verfahren zur verbesserten keramischen Beschichtung
Procédé pour un revêtement céramique amélioré

(30) Priority: 25.04.2007 US 739823
(43) Date of publication of application: 29.10.2008
(73) Proprietor: United Technologies Corporation, Hartford, CT 06101 (US)
(72) Inventor: Strock, Christopher W., Kennebunk, Maine 04043 (US); Tholen, Susan M., Kennebunk, Maine 04043 (US)
(74) Representative: Hall, Matthew Benjamin

(56) References cited:
- EP-A1- 0 415 217
- EP-A1- 1 829 984
- EP-A2- 1 752 553
- EP-B1- 1 283 278
- DE-A1- 19 740 205
- GB-A- 2 062 115
- GB-A- 2 100 621
- JP-A- 62 274 062
- JP-A- 63 038 565
- JP-A- 2000 144 365
- JP-A- 2000 301 655
- US-A- 4 377 371
- US-A- 4 430 360
- US-A- 4 457 948
- US-A1- 2003 027 012
- US-A1- 2003 203 224
- US-A1- 2004 156 724

## Description

This invention relates to protective coatings and, more particularly, to methods of manufacturing ceramic coatings having pre-formed stress relief cracks.

Components that are exposed to high temperatures, such as a component within a gas turbine engine, typically include protective coatings. For example, components such as turbine blades, turbine vanes, and blade outer air seals typically include one or more coating layers that function to protect the component from erosion, oxidation, corrosion or the like to thereby enhance component durability and maintain efficient operation of the engine. In particular, conventional outer air seals include an abradable ceramic coating that contacts tips of the turbine blades such that the blades abrade the coating upon operation of the engine. The abrasion between the outer air seal and the blade tips provides a minimum clearance between these components such that gas flow around the tips of the blades is reduced to thereby maintain engine efficiency.

One drawback of the abradable type of coating is its vulnerability to erosion and spalling. For example, spalling may occur as a loss of portions of the coating that detach from the outer air seal. Loss of the coating increases clearance between the outer air seal and the blade tips, and is detrimental to turbine efficiency. One cause of spalling is the elevated temperature within the turbine section, which causes sintering of a surface layer of the coating. The sintering causes the coating to shrink, which produces stresses between the coating and a substrate of the outer air seal. If the stresses are great enough, the coating may delaminate and detach from the substrate.

One solution for improving spalling and delamination resistance is to reduce the internal stresses by forming stress relief cracks in the coating. For example, conventional thermal spray processes are used to form coatings with stress relief cracks. Process parameters, such as a nozzle travel speed and flame temperature must be carefully controlled to provide conditions that induce the formation of the stress relief cracks as the coating is deposited onto a substrate. One drawback of such a process is that the conditions for inducing the stress relief cracks are not always compatible with producing a coating having desirable mechanical properties. For example, a hardness, density, and porosity of the coating may not yield favorable abrasion characteristics of the coating, which is detrimental to turbine efficiency.

JP 63-38565 describes a method for reinforcing a ceramic film in which the surface of the ceramic film is irradiated with laser light, after which the ceramic coated material is cooled and cracks are formed which split the ceramic film surface.

US 2004/0156724 describes a method of applying a thermal barrier coating material in which a ceramic layer is irradiated with a laser beam while cooling a rear surface of a base material to cause microcracks which extend in the thickness direction in the ceramic layer with the proviso that neither a phase modification nor sintering occur in the ceramic layer.

According to one aspect, the invention provides a method of manufacturing an article having a ceramic topcoat, comprising: (a) forming the ceramic topcoat on the article; (b) subsequent to said step (a), heating the ceramic topcoat and cooling the article by air impingement cooling; and characterised by (c) a controlled sintering step comprising controlling said heating and said cooling to establish a predetermined thermal gradient through the ceramic topcoat to induce segmentation cracking in at least a portion of the ceramic topcoat, and wherein said predetermined thermal gradient provides the ceramic topcoat with cracks having a predetermined spacing between cracks, a predetermined crack depth, or a predetermined number of cracks per unit surface area, wherein said step (a) includes forming the ceramic topcoat with a nominal thickness of at least 20 mils (0.0005 m), and wherein said step (c) comprises controlled sintering of at least a portion of the ceramic topcoat to induce segmentation cracking in the ceramic topcoat.

An example method of manufacturing an article having a ceramic topcoat includes the steps of forming the ceramic topcoat on the article, heating the ceramic topcoat, and establishing a desired thermal gradient through the ceramic topcoat to induce segmentation cracking in at least a portion of the ceramic topcoat. The step of heating is subsequent to the step of forming the ceramic topcoat.

The invention provides a method of manufacturing an article having a ceramic topcoat including the steps of forming the ceramic topcoat on the article and, subsequent to the forming step, a conditioning step that includes a controlled sintering of at least part of the ceramic topcoat to induce the segmentation cracking in the ceramic topcoat.

Preferred embodiments of the invention will now be described, by way of example only, and with reference to the accompanying drawings in which:
Figure 1 illustrates an example gas turbine engine.
Figure 2 illustrates the turbine section of the gas turbine engine shown in Figure 1.
Figure 3 illustrates a portion of a seal member within the gas turbine engine within the turbine section of the gas turbine engine.
Figure 4 illustrates an example method for forming a ceramic topcoat on the seal member.
Figure 5 illustrates an example process for preconditioning the ceramic topcoat to induce formation of the stress relief cracking.

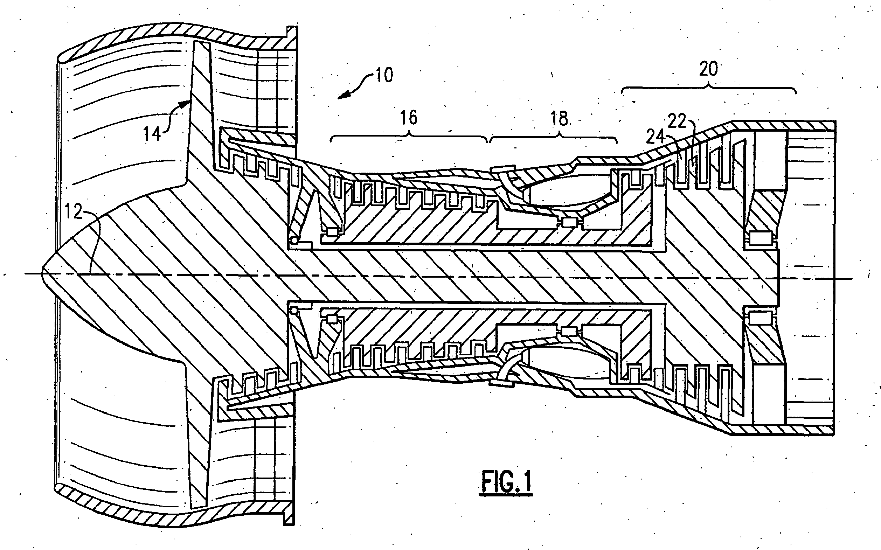

Figure 1 illustrates selected portions of an example gas turbine engine 10, such as a gas turbine engine 10 used for propulsion. In this example, the gas turbine engine 10 is circumferentially disposed about an engine centerline 12. The engine 10 includes a fan 14, a compressor section 16, a combustion section 18 and a turbine section 20 that includes turbine blades 22 and turbine vanes 24. As is known, air compressed in the compressor section 16 is mixed with fuel that is burned in the combustion section 18 to produce hot gases that are expanded in the turbine section 20. Figure 1 is a somewhat schematic presentation for illustrative purposes only and is not a limitation on the disclosed examples. Additionally, there are various types of gas turbine engines, many of which could benefit from the examples disclosed herein, which are not limited to the design shown.

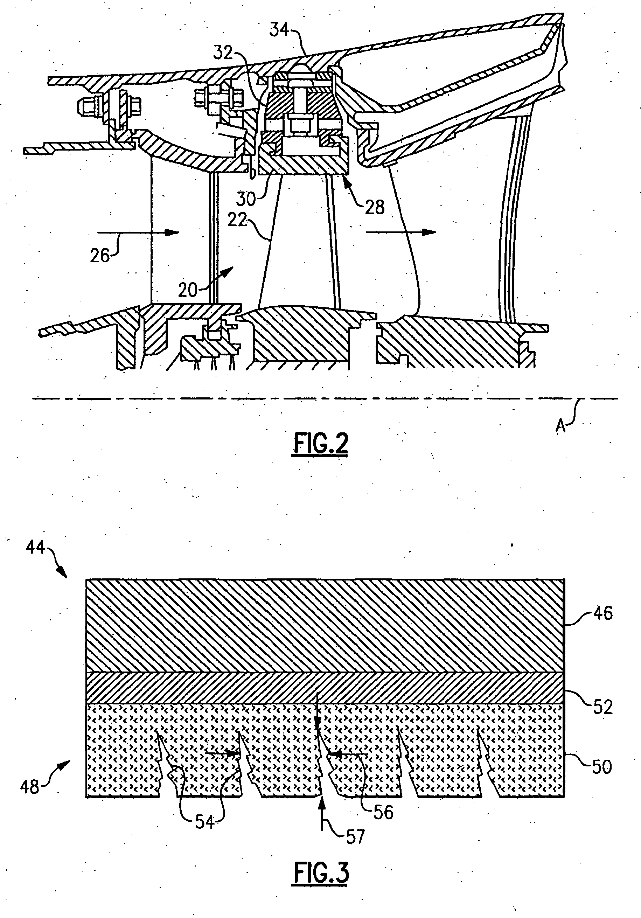

Figure 2 illustrates selected portions of the turbine section 20. The turbine blade 22 receives a hot gas flow 26 from the combustion section 18 (Figure 1). The turbine section 20 includes a blade outer air seal system 28 having a seal member 30 that functions as an outer wall for the hot gas flow 26 through the turbine section 20. The seal member 30 is secured to a support 32, which is in turn secured to a case 34 that generally surrounds the turbine section 20. For example, a plurality of the seal members 30 are circumferentially located about the turbine section 20.

Figure 3 illustrates an example portion 44 of the seal member 30. In this example, the seal member 30 includes a substrate 46 having a coating system 48 disposed thereon. The coating system 48 includes a ceramic topcoat 50, such as an abradable ceramic coating (e.g., zirconia), and a bond coat 52 between the ceramic topcoat 50 and the substrate 46. Although a particular coating system 48 is shown, it is to be understood that the disclosed examples are not limited to the illustrated configuration and may include bond coats having a plurality of layers, no bond coat at all, or ceramic topcoats having a plurality of ceramic layers. Furthermore, although the disclosed example is for the seal member 30, it is to be understood that the examples herein may also be applied to other types of engine or non-engine components.

The ceramic topcoat 50 is segmented by cracks 54 that extend partially through a thickness of the ceramic topcoat 50. In other examples, the cracks 54 may extend entirely through the ceramic topcoat 50. The cracks 54 can be characterized as having an average spacing 56 there between, and average crack depth 57, and an average number of the cracks 54 per unit surface area of the ceramic topcoat 50. For example, the average crack spacing 56, average crack depth 57, and average number can be determined or estimated in any suitable manner, such as by using microscopy techniques.

The cracks 54 reduce internal stresses within the ceramic topcoat 50 that occur from sintering the ceramic topcoat 50 at relatively high service temperatures within the turbine section 20 during use in the gas turbine engine 10. For example, service temperatures of about 2,500°F (1,370°C) and higher cause sintering near the exposed surfaced of the ceramic topcoat 50. The sintering may result in partial melting, densification, and diffusional shrinkage of the ceramic topcoat 50 and thereby induce internal stresses within the ceramic topcoat 50. The cracks 54 provide preexisting locations for releasing energy associated with the internal stresses (e.g., reducing shear and radial stresses). That is, the energy associated with the internal stresses is dissipated in propagation of the cracks 54 such that there is less energy available for causing delamination cracking between the ceramic topcoat 50 and the bond coat 52, for example.

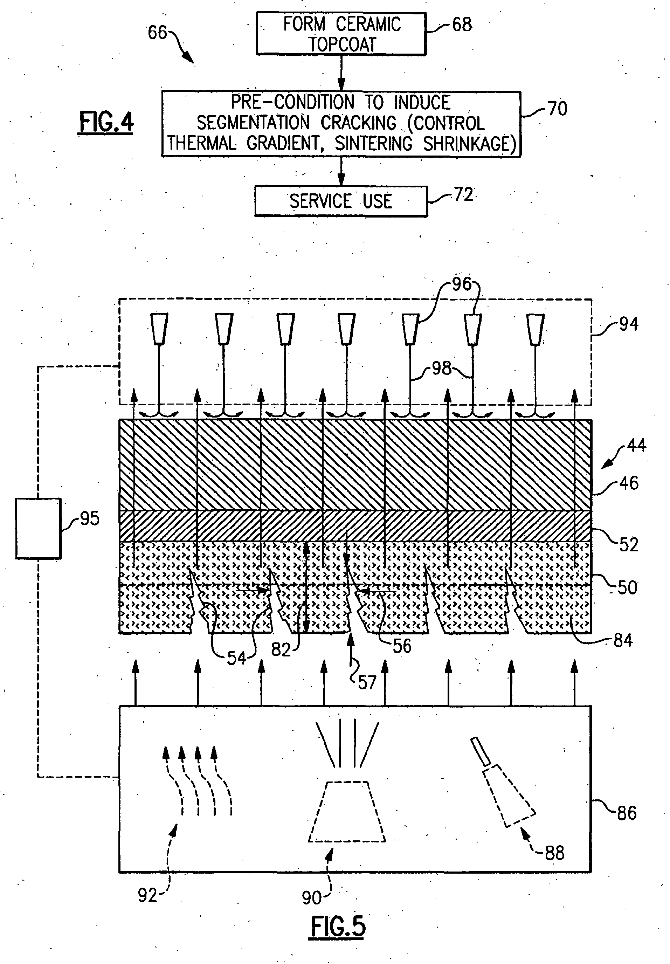

Figure 4 illustrates an example method 66 of manufacturing an article having the ceramic topcoat 50, such as the seal member 30. In this example, the ceramic topcoat 50 is formed on the superalloy substrate 46 at step 68. The bond coat 52 may be deposited onto the substrate 46 before forming the ceramic topcoat 50 using a known process, such as vapor deposition, arc deposition, thermal spray processes, or the like. The ceramic topcoat 50 is formed on the bond coat 52 using a thermal spray process. For example, the thermal spray process may include plasma spraying ceramic or precursor materials within a jet of hot gasses such as a plasma to heat the materials as they are sprayed onto the bond coat 52. The spray parameters, such as a spray rate, a plasma temperature, a plasma power level, and a travel rate across the surface of the bond coat 52 may be controlled in a desired manner to achieve desired properties of the ceramic topcoat 50 (e.g., thickness, density, porosity, etc.).

Subsequent to forming the ceramic topcoat 50, the cracks 54 do not exist. The ceramic topcoat 50 is then pre-conditioned at step 70 to induce formation of the cracks 54. The ceramic topcoat 50 forming step 68 and the pre-conditioning step 70 are separate steps. Separating the steps allows greater flexibility in selecting the control parameters for each of the steps without being limited by the parameters of the other step. For example, in known thermal spray processes that integrate forming the ceramic topcoat with forming stress relief cracks, process parameters such as the travel speed across the surface and the flame temperature must be carefully controlled to provide conditions that induce the cracking. However, by separating the ceramic topcoat forming step 68 from the pre-conditioning step 70 as disclosed herein, the ceramic topcoat forming step 68 is not so limited. This provides the benefit of allowing higher travel rates, lower flame temperatures, lower power levels, and the like which in turn permit improved process stability and better control over porosity and density (which corresponds to abradability) of the ceramic topcoat 50.

After the pre-conditioning step 70, the seal member 30 or other article is installed within the gas turbine engine 10 for operation at an expected service temperature at step 72. It is to be understood that other manufacturing steps or processes may occur between the formation of the topcoat 50 and the pre-conditioning step 70 and between the pre-conditioning step 70 and the service use step 72, such as machining.

Figure 5 illustrates an example of the pre-conditioning step 70. In this example, a thermal gradient 82 across the ceramic topcoat 50 is established to induce sintering shrinkage within a surface layer 84 of the ceramic topcoat 50 and thereby control formation of the cracks 54. The thermal gradient 82 is controlled to produce a predetermined average crack spacing 56, average crack depth 57, and average number of the cracks 54 per unit surface area.

The ceramic topcoat 50 is heated to a predetermined surface temperature using heating device 86. In this example, the predetermined surface temperature and resultant thermal gradient 82 is greater than the 2500°F (1370°C) surface temperature and 1000°F (540°C) thermal gradient that the ceramic topcoat 50 is expected to be exposed to in service use. Pre-conditioning the ceramic topcoat 50 at a surface temperature greater than the expected 2500°F (1370°C) service use surface temperature provides an average crack spacing 56 that is smaller than a spacing that would occur naturally (without the cracks 54) below 2500°F (1370°C), which makes the ceramic topcoat 50 more resistant to spalling and delamination.

A nominal thickness of the ceramic topcoat 50 may affect the formation of the cracks 54. That is, it is generally easier to control the thermal gradient 82 for relatively thicker versions of the ceramic topcoat 50 than for relatively thinner versions of the ceramic topcoat 50. However, the desirability of thickness may be tempered by the undesirability of increasing the weight of the ceramic topcoat 50 (and thus the weight of the seal member 30). Although the disclosed examples are not limited by thickness, a nominal thickness between 20 and 40 mils (0.5 to 1 mm) provides an example of a desirable balance between thickness for thermal gradient control and low.weight. In a further example, the nominal thickness is between 40 mils and 80 mils (1 mm to 2 mm).

The heating device 86 may include a laser heater 88, a flame heater 90 (e.g., a plasma flame heater or a combustion flame heater), a radiant heater 92, or another suitable type of heating device. The heating device 86 uniformly heats the exposed outer surface area of the ceramic topcoat 50. A cooler 94 removes heat from the substrate 46 that has been transferred from the ceramic topcoat 50 to the substrate 46 via the bond coat 52.

In this example, the cooler 94 includes a plurality of jets 96 that provide airstreams 98 for impingement cooling of the substrate 46. Impingement cooling provides the benefit of uniformly removing the heat for control of the thermal gradient 82. A controller 95 controls the cooler 94 and the heating device 86 to establish the thermal gradient 82. That is, by controlling the amount of heat provided by the heating device 86 and the amount of cooling provided by the cooler 94, the thermal gradient 82 is controlled to preferentially sinter the surface layer 84 of the ceramic topcoat 50 to produce the cracks 54. The surface layer may include only a portion of the thickness of the ceramic topcoat 50 or the entire thickness of the ceramic topcoat 50.

For example, the thermal gradient 82 and surface temperature are controlled to achieve predetermined values of the average crack spacing 56, average crack depth 57, and average number of cracks 54 per unit surface area. A relatively large thermal gradient 82 may be used to produce a relatively smaller average crack spacing 56, smaller average crack depth 57, and larger average number of cracks 54 per unit surface area. In contrast, a smaller thermal gradient 82 may be used to produce a relatively larger average crack spacing 56, larger average crack depth 57, and smaller average number of cracks 54 per unit surface area. A relatively higher surface temperature may be used to produce relatively larger average crack depth 57. In contrast, a relatively lower surface temperature may be used to produce a relatively smaller average crack depth 57. Thus, by controlling the heating and the cooling to control thermal gradient 82, one can control the crack spacing 56, crack depths 57, and number of cracks 54 to tailor the ceramic topcoat 50 for particular turbine engine design conditions.

In one preferred embodiment, the controlled sintering of the conditioning step includes partially melting a surface layer of the ceramic topcoat.

In another preferred embodiment, the controlled sintering of the conditioning step includes diffusionally shrinking at least a surface layer of the ceramic topcoat.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A method of manufacturing an article having a ceramic topcoat (50), comprising:
(a) forming the ceramic topcoat (50) on the article;
(b) subsequent to said step (a), heating the ceramic topcoat (50) and cooling the article by air impingement cooling (94); and **characterised by**
(c) a controlled sintering step comprising controlling said heating and said cooling to establish a predetermined thermal gradient (82) through the ceramic topcoat (50) to induce segmentation cracking in at least a portion of the ceramic topcoat (50), and wherein said predetermined thermal gradient (82) provides the ceramic topcoat (50) with cracks having a predetermined spacing between cracks (56), a predetermined crack depth (57), or a predetermined number of cracks per unit surface area (54),
wherein said step (a) includes forming the ceramic topcoat (50) with a nominal thickness of at least 20 mils (0.0005 m), and
wherein said step (c) comprises controlled sintering of at least a portion of the ceramic topcoat (5) to induce segmentation cracking in the ceramic topcoat (50).

2. A method as claimed in claim 1, wherein the cooling includes controlling heat removal from the article.

3. A method as claimed in claim 1 or 2, wherein said step (b) includes at least one of laser heating (88), flame heating (90), or radiant heating (92).

4. A method as claimed in any preceding claim, wherein said step (c) includes controlling the thermal gradient (82) to establish segmentation cracks (54) that extend at least partially through a thickness of the ceramic topcoat (50).

5. A method as claimed in claim 4, wherein said step (c) includes controlling the thermal gradient (82) to establish segmentation cracks (54) that extend entirely through the ceramic topcoat (50).

6. A method as claimed in claim 4 or 5, wherein said step (c) includes controlling the thermal gradient (82) to achieve a predetermined average crack length (57) of the segmentation cracks (54) through the thickness of the ceramic topcoat (50).

7. A method as claimed in any preceding claim, wherein said steps (b) and (c) occur prior to using the article at service temperatures within a gas turbine engine (10).

8. A method as claimed in any preceding claim, wherein said step (a) includes forming the ceramic topcoat (50) with a nominal thickness of 40-80 mils (0.001-0.002 m).

9. A method as claimed in any preceding claim, further comprising forming a bondcoat (52) between the ceramic topcoat (50) and the article.

10. A method as claimed in any preceding claim, wherein said step (c) includes uniformly heating one side of the ceramic topcoat (50) at a predetermined temperature.

11. A method as claimed in any preceding claim, wherein said step (c) includes heating the ceramic topcoat (50) at a temperature greater than or equal to 2500°F (1370°C).

12. A method as claimed in any preceding claim, wherein the controlled sintering includes partially melting a surface layer of the ceramic topcoat (50).

13. A method as claimed in any of claims 1 to 12, wherein the controlled sintering includes diffusionally shrinking at least a surface layer of the ceramic topcoat (50).

## Patentansprüche

1. Verfahren zum Herstellen eines Artikels mit einem Keramiküberzug (50), umfassend:
(a) Bilden eines Keramiküberzugs (50) an dem Artikel;
(b) nach Schritt (a), Erwärmen des Keramiküberzugs (50) und Kühlen des Artikels durch Luftprallkühlung (94); und gekennzeichnet durch:
(c) einen gesteuerten Sinterschritt, umfassend Steuern der Erwärmung und der Kühlung, um einen vorgegebenen Wärmegradienten (82) durch den Keramiküberzug (50) herzustellen, um Segmentierungsrisse in wenigstens einem Abschnitt des Keramiküberzugs (50) zu induzieren, und wobei der vorgegebene Wärmegradient (82) den Keramiküberzug (50) mit Rissen versieht, die einen vorgegebenen Abstand zwischen Rissen (56), eine vorgegebene Risstiefe (57) oder eine vorgegebenen Anzahl von Rissen pro Oberflächeneinheit (54) aufweisen,
wobei Schritt (a) das Bilden des Keramiküberzugs (50) mit einer Nenndicke von wenigstens 20 mil (0,0005 m) einschließt, und
wobei Schritt (c) ein gesteuertes Sintern von wenigstens einem Abschnitt des Keramiküberzugs (5) umfasst, um Segmentierungsrisse in dem Keramiküberzug (50) zu induzieren.

2. Verfahren nach Anspruch 1, wobei das Kühlen ein Steuern der Wärmeabführung von dem Artikel einschließt.

3. Verfahren nach Anspruch 1 oder 2, wobei Schritt (b) wenigstens eins von Lasererwärmen (88), Flammerwärmen (90) oder Strahlungserwärmen (92) einschließt.

4. Verfahren nach einem der vorangehenden Ansprüche, wobei Schritt (c) ein Steuern des Wärmegradienten (82) zum Herstellen von Segmentierungsrissen (54) einschließt, die sich wenigstens teilweise durch eine Dicke des Keramiküberzugs (50) erstrecken.

5. Verfahren nach Anspruch 4, wobei Schritt (c) ein Steuern des Wärmegradienten (82) zum Herstellen von Segmentierungsrissen (54) einschließt, die sich vollständig durch den Keramiküberzug (50) erstrecken.

6. Verfahren nach Anspruch 4 oder 5, wobei Schritt (c) ein Steuern des Wärmegradienten (82) zum Erreichen einer vorgegebenen mittleren Risslänge (57) der Segmentierungsrisse (54) durch die Dicke des Keramiküberzugs (50) einschließt.

7. Verfahren nach einem der vorangehenden Ansprüche, wobei Schritt (b) und (c) stattfinden, bevor der Artikel bei Betriebstemperaturen in einem Gasturbinentriebwerk (10) benutzt wird.

8. Verfahren nach einem der vorangehenden Ansprüche, wobei Schritt (a) ein Bilden des Keramiküberzugs (50) mit einer Nenndicke von 40-80 mil (0,001-0,002 m) einschließt.

9. Verfahren nach einem der vorangehenden Ansprüche, ferner umfassend Bilden einer Bindungsschicht (52) zwischen dem Keramiküberzug (50) und dem Artikel.

10. Verfahren nach einem der vorangehenden Ansprüche, wobei Schritt (c) ein gleichmäßiges Erwärmen einer Seite des Keramiküberzugs (50) auf eine vorgegebene Temperatur einschließt.

11. Verfahren nach einem der vorangehenden Ansprüche, wobei Schritt (c) ein Erwärmen des Keramiküberzugs (50) auf eine Temperatur gleich oder größer als 2500 °F (1370 °C) einschließt.

12. Verfahren nach einem der vorangehenden Ansprüche, wobei das gesteuerte Sintern ein Teilschmelzen einer Oberflächenschicht des Keramiküberzugs (50) einschließt.

13. Verfahren nach einem der Ansprüche 1 bis 12, wobei das gesteuerte Sintern ein diffundierendes Schrumpfen von wenigstens einer Oberflächenschicht des Keramiküberzugs (50) einschließt.

## Revendications

1. Procédé de fabrication d'un article contenant un revêtement de finition en céramique (50), comprenant :
(a) la formation du revêtement de finition en céramique (50) sur l'article ;
(b) à la suite de l'étape (a), le chauffage du revêtement de finition en céramique (50) et le refroidissement de l'article par refroidissement par contact à l'air (94) ; et **caractérisé par**
(c) une étape de frittage contrôlé comprenant le contrôle dudit chauffage et dudit refroidissement pour établir un gradient thermique prédéterminé (82) à travers le revêtement de finition en céramique (50) pour induire un craquage par segmentation dans au moins une partie du revêtement de finition en céramique (50), et dans lequel ledit gradient thermique prédéterminé (82) donne au revêtement de finition en céramique (50) des fissures présentant un espacement prédéterminé entre les fissures (56), une profondeur prédéterminée de fissure (57) ou un nombre prédéterminé de fissures par surface unitaire (54),
l'étape (a) comprenant la formation d'un revêtement de finition en céramique (50) d'épaisseur nominale d'au moins 20 millièmes de pouce (0,0005 m), et
l'étape (c) comprenant le frittage contrôlé d'au moins une partie du revêtement de finition en céramique (5) pour induire un craquage par segmentation dans le revêtement de finition en céramique (50).

2. Procédé selon la revendication 1, dans lequel le refroidissement comprend le contrôle de l'élimination de chaleur de l'article.

3. Procédé selon la revendication 1 ou 2, dans lequel ladite étape (b) comprend au moins soit un chauffage au laser (88), soit un chauffage à la flamme (90) soit un chauffage par rayonnement (92).

4. Procédé selon l'une quelconque des revendications précédentes, dans lequel ladite étape (c) comprend le contrôle du gradient thermique (82) pour établir des fissures de segmentation (54) qui s'étendent au moins en partie à travers une épaisseur du revêtement de finition en céramique (50).

5. Procédé selon la revendication 4, dans lequel ladite étape (c) comprend le contrôle du gradient thermique (82) pour établir des fissures de segmentation (54) qui s'étendent entièrement à travers le revêtement de finition en céramique (50).

6. Procédé selon la revendication 4 ou 5, dans lequel ladite étape (c) comprend le contrôle du gradient thermique (82) pour obtenir une longueur prédéterminée de fissure moyenne (57) des fissures de segmentation (54) à travers l'épaisseur du revêtement de finition en céramique (50).

7. Procédé selon l'une quelconque des revendications précédentes, dans lequel lesdites étapes (b) et (c) ont lieu avant l'emploi de l'article à des températures de service au sein d'un moteur à turbine à gaz (10).

8. Procédé selon l'une quelconque des revendications précédentes, dans lequel ladite étape (a) comprend la formation du revêtement de finition en céramique (50) avec une épaisseur nominale de 40 à 80 millièmes de pouce (0,001 à 0,002 m).

9. Procédé selon l'une quelconque des revendications précédentes, comprenant en outre la formation d'un revêtement de liaison (52) entre le revêtement de finition en céramique (50) et l'article.

10. Procédé selon l'une quelconque des revendications précédentes, dans lequel ladite étape (c) comprend le chauffage uniforme d'un côté du revêtement de finition en céramique (50) à une température prédéfinie.

11. Procédé selon l'une quelconque des revendications précédentes, dans lequel ladite étape (c) comprend le chauffage du revêtement de finition en céramique (50) à une température supérieure ou égale à 2 500 °F (1 370 °C).

12. Procédé selon l'une quelconque des revendications précédentes, dans lequel le frittage contrôlé comprend la fusion partielle d'une couche superficielle du revêtement de finition en céramique (50).

13. Procédé selon l'une quelconque des revendications 1 à 12, dans lequel le frittage contrôlé comprend le rétrécissement par diffusion d'au moins une couche superficielle du revêtement de finition en céramique (50).
